# EUROPÄISCHE PATENTSCHRIFT

(11) **EP 1 954 536 B1**
(45) Veröffentlichungstag und Bekanntmachung des Hinweises auf die Patenterteilung: **07.04.2010**
(21) Anmeldenummer: 06829218.4
(22) Anmeldetag: 28.11.2006
(51) Int. Cl.: B60R 21/26, B60R 21/233

(54) **GASSTROMVERTEILER FÜR EIN GASSACKMODUL**
GAS FLOW DISTRIBUTOR FOR AN AIRBAG MODULE
DISTRIBUTEUR DE COURANT DE GAZ POUR UN MODULE POCHE DE GAZ

(30) Priorität: 01.12.2005 DE 202005019013 U
(43) Veröffentlichungstag der Anmeldung: 13.08.2008
(73) Patentinhaber: Takata-Petri AG, 63743 Aschaffenburg (DE)
(72) Erfinder: HONOLD, Richard, 89134 Blaustein (DE); GUTMANN, Ralf, 89075 Ulm Ulm (DE); JONAS, Reiner, 70771 Leinfelden-Echterdingen (DE)
(74) Vertreter: Baumgärtel, Gunnar
(86) Internationale Anmeldenummer: PCT/EP2006/011522
(87) Internationale Veröffentlichungsnummer: WO 2007/062847

(56) Entgegenhaltungen:
- EP-A1- 1 418 096
- WO-A-00/20260
- WO-A-2005/080147
- DE-A1- 19 946 413
- JP-A- 2000 127 887
- US-A1- 2004 188 987
- US-B1- 6 419 266
- ANONYMOUS: "Fabric diffuser panel for air bag module" RESEARCH DISCLOSURE, MASON PUBLICATIONS, HAMPSHIRE, GB, Bd. 440, Nr. 115, Dezember 2000 (2000-12), XP007127300 ISSN: 0374-4353

## Beschreibung

Die Erfindung betrifft einen Gasstromverteiler für ein Gassackmodul zum gezielten Verteilen eines von einem Gasgenerator zum Aufblasen eines Gassacks erzeugten Gasstroms gemäß dem Oberbegriff des Anspruchs 1 sowie ein Gassackmodul mit einem derartigen Gasstromverteiler gemäß Anspruch 18.

Ein Gassackmodul für Fahrzeug-Rückhaltesysteme umfasst in der Regel einen Gassack sowie einen Gasgenerator, der im Auslösefall Gas zum Aufblasen des Gassacks erzeugt. Das Einströmen des erzeugten Gases in den Gassack muss möglichst gezielt erfolgen, um ein definiertes Entfalten des Gassacks - und damit eine optimale Schutzwirkung bei einem Unfall - zu gewährleisten.

Es sind Gasstromverteiler zur Verwendung mit Gasgeneratoren bekannt, die zum Verteilen des von einem Gasgenerator zum Aufblasen des Gassacks erzeugten Gasstroms hülsenförmig um den Gasgenerator angeordnet werden. Derartige Gasstromverteiler sind im Bereich von Ausströmöffnungen des Gasgenerators so angeordnet, dass das im Auslösefall ausströmende Gas von dem Gasstromverteiler gezielt aufgeteilt und weitergeleitet wird. Die vorbekannten hülsenförmigen Gasstromverteiler besitzen an beiden Enden Öffnungen, aus denen das vom Gasgenerator erzeugte Gas in einen Gassack einströmen kann.

Aus der WO 02/081267 A2 ist beispielsweise ein Gassackmodul für einen Seitengassack bekannt, das einen Rohrgasgenerator zum Aufblasen des Gassacks aufweist, der von einem hülsenförmigen Gasstromverteiler umgeben ist. Dabei kann der Gasstromverteiler aus Metall oder einem flexiblen Material gebildet sein. Der in der WO 02/081267 A2 beschriebene Gasstromverteiler ist im Innern des Gassacks angeordnet und mit der Gassackinnenwand verbunden.

Weiterhin ist in der WO 00/32447 eine Gasgeneratorvorrichtung beschrieben, die ein röhrenförmiges inneres Element zur Aufnahme eines pyrotechnischen Stoffes aufweist, der bei Zündung ein Gas zum Aufblasen eines Gassacks freisetzt. Das innere Element ist von einem äußeren, ebenfalls röhrenförmig gebildeten Element umgeben, das Ausströmöffnungen aufweist und zum Verteilen eines aus dem inneren Element ausströmenden Gasstroms dient.

Aus der gattungsbildenden US 6 419 266 B1 ist ein hülsenförmiger Gasstromverteiler aus einem flexiblen Material bekannt. Der Gasstromverteiler ist mittels eines Befestigungsbolzens an einem Gasgenerator festgelegt.

Das von der vorliegenden Erfindung zu lösende Problem besteht darin, einen Gasstromverteiler zur Verfügung zu stellen, der auf vereinfachte Weise mit einem Gasgenerator verbunden werden kann.

Dieses Problem wird erfindungsgemäß durch einen Gasstromverteiler mit den Merkmalen des Anspruchs 1 sowie durch ein Gassackmodul mit den Merkmalen des Anspruchs 18 gelöst.

Danach ist ein Gasstromverteiler zum gezielten Verteilen eines von einem Gasgenerator zum Aufblasen eines Gassacks erzeugten Gasstroms vorgesehen. Der Gasstromverteiler ist hülsenförmig aus einem flexiblen Material gebildet und weist Befestigungsstrukturen zum Verbinden mit einem Gasgenerator auf.

Hiermit wird ein Gasstromverteiler bereitgestellt, der sich in besonders einfacher Weise mit einem Gasgenerator über Befestigungsstrukturen verbinden lässt. Insbesondere ist es möglich, eine Gasgenerator-Gasstromverteiler-Baugruppe vor deren Montage in einem Gassackmodul vorzumontieren, wodurch die Herstellung des kompletten Gassackmoduls in stärkerem Maße automatisierbar und somit kostengünstiger wird. Des Weiteren sorgt das Vorhandensein spezieller Befestigungsstrukturen zum Verbinden des Gasstromverteilers mit einem Gasgenerator dafür, dass eine sichere Verbindung zwischen den beiden Einheiten gewährleistet ist, auch unter den im Auslösefall im Gassackmodul auftretenden Belastungen.

Es sei darauf hingewiesen, dass die Befestigungsstrukturen am Gasstromverteiler auch so ausgebildet und vorgesehen sein können, dass sie zum mittelbaren Verbinden des Gasstromverteilers mit einem Gasgenerator geeignet sind. Dabei kann ein Gasgenerator zum Beispiel an einem Halter, einem Flansch oder einem sonstigen Element eines Gas sackmoduls angeordnet sein und die Befestigung des Gasstromverteilers an dem Gasgenerator über den Halter oder das sonstige Teil des Gassackmoduls erfolgen.

Darüber hinaus kann der Gasgenerator selber oder ein mit ihm verbundenes Teil ebenfalls Befestigungsstrukturen aufweisen, die korrespondierend zu den am Gasstromverteiler vorhandenen Befestigungsstrukturen ausgebildet sind, wodurch eine besonders effiziente Montage von Gasstromverteiler und Gasgenerator möglich ist. Die Verbindung zwischen Gasstromverteiler und Gasgenerator über korrespondierende Befestigungsstrukturen ist darüber hinaus besonders sicher und kann besonders belastbar ausgelegt sein, da zur Befestigung des Gasstromverteilers keine für andere Zwecke am Gasgenerator ausgebildeten Elemente zum Herstellen der Verbindung benutzt werden müssen.

In einer bevorzugten Ausgestaltung sind die Befestigungsstrukturen zur Herstellung einer Klemmverbindung mit einem Gasgenerator ausgebildet und vorgesehen. Mit der Möglichkeit, den Gasstromverteiler über eine Klemmverbindung an einem Gasgenerator zu befestigen, ist eine besonders einfache Montage des Gasstromverteilers mit dem Gasgenerator möglich.

Vorteilhafterweise sind die Befestigungsstrukturen so ausgebildet und vorgesehen, dass der Gasstromverteiler an einem Gastgenerator anklemmbar ist, ohne dass ein Klemmmittel den gesamten Umfang des Gasstromverteilers umgreifen muss. Durch diese Ausbildung der Befestigungsstrukturen ist ein besonders einfaches und flexibles Anklemmen des Gasstromverteilers an einem Gasgenerator möglich. Insbesondere kann mit Hilfe derartiger Befestigungsstrukturen ein Gasstromverteiler, der keine hohlzylindrische Form aufweist, sondern zum Beispiel einen zumindest teilweise ovalen Querschnitt aufweist, sicher an einem Gasgenerator angeklemmt werden.

In bevorzugter Weise weisen die Befestigungsstrukturen des Weiteren mindestens eine Öffnung zum Durchführen eines an einem Gasgenerator angeordneten Gewindebolzens auf. Damit kann der Gasstromverteiler so an einem Gasgenerator angeordnet werden, dass ein an diesem angeordneter Gewindebolzen die Öffnung durchgreift, wodurch eine Fixierung des Gasstromverteilers an dem Gasgenerator entsteht. Dabei kann der Durchmesser der Öffnung so gewählt sein, dass der Gewindebolzen mit der Öffnung verklemmt wird, wodurch eine einfach zu realisierende und dennoch stabile Verbindung zwischen dem Gasstromverteiler und dem Gasgenerator möglich ist.

Der Gewindebolzen kann dabei unmittelbar an dem Gasgenerator ausgebildet sein, zum Beispiel auch einstückig mit diesem verbunden sein, oder er ist Bestandteil eines weiteren Teils des Gassackmoduls, das mit dem Gasgenerator verbunden ist, insbesondere eines Gasgeneratorträgers oder -halters. Hierbei würde die Verbindung zum Gasstromverteiler dann mittelbar über das weitere Teil des Gassackmoduls erfolgen, das mit dem Gasgenerator verbunden ist.

Eine weitere, bevorzugte Ausgestaltung der Erfindung sieht vor, dass die Befestigungsstrukturen mindestens eine Befestigungslasche umfassen, über den der Gasstromverteiler mit einem Gasgenerator verbindbar ist. Diese Befestigungslasche ist beispielsweise an einem Ende des Gasstromverteilers ausgebildet und ermöglicht die Verbindung zum Gasgenerator mittels eines Klemmmittels, etwa einer Schelle.

Das Vorhandensein von Befestigungslaschen an dem Gasstromverteiler ermöglicht darüber hinaus eine einfache und Platz sparende Verbindung des Gasstromverteilers mit einem Gasgenerator. Beispielsweise kann der Gasstromverteiler über die Befestigungslaschen an einem zylindrischen Rohrgasgenerator angeklemmt werden, ohne dass dabei der Gasstromverteiler mit einer Schelle an dem Gasgenerator "festgezurrt" werden muss, was je nach Starrheit des für den Gasstromverteiler verwendeten Materials schwierig sein kann.

Der Gasstromverteiler kann in dieser Ausgestaltung so ausbildet sein, dass er beispielsweise in der Mitte oder auch an einem Ende eines Gasgenerators befestigbar ist. Im ersten Fall weist der Gasstromverteiler an jedem seiner Enden eine Befestigungslasche auf, im zweiten Fall sind bevorzugt mindestens zwei Befestigungslaschen an demselben Ende des Gasstromverteilers angeordnet.

Es können in den Befestigungslaschen auch zusätzlich Öffnungen zur Aufnahme eines am Gasgenerator angeordneten Gewindebolzens vorgesehen sein, um eine zusätzliche Fixierung des Gasstromverteilers an einem Gasgenerator zu ermöglichen, die insbesondere greift, wenn eine Befestigungslasche aus der Klemmung herausrutschen sollte.

Vorteilhafterweise werden die freien Enden zweier an demselben Ende des Gasstromverteilers angeordneter Befestigungslaschen miteinander verbunden. Hierdurch wird die Abströmung über das entsprechende Ende des Gasstromverteilers gesteuert, beispielsweise zusätzlich in ein oder mehrere Gasströme aufgeteilt.

Generell ist die Verteilung des Gasstroms durch den Gasstromverteiler und die Abströmung durch diesen über dessen Länge sowie dessen Durchmesser steuerbar. Zusätzlich kann über die Größe und die Geometrie der Befestigungslaschen die Abströmung aus den Ausströmöffnungen des Gasstromverteilers gesteuert werden.

Insbesondere über die Ausrichtung von an den Enden des Gasstromverteilers angeordneten Befestigungslaschen kann der aus einer Ausströmöffnung des Gasstromverteilers ausströmende Gasstrom zusätzlich abgelenkt und dessen Richtung beeinflusst werden. Durch das Verbinden zweier oder mehrerer Befestigungslaschen lässt sich der ausströmende Gasstrom darüber hinaus in weitere Teilströme aufteilen.

Auch wenn vorteilhafterweise vorgesehen ist, dass jedes Ende des Gasstromverteilers mindestens eine Ausströmöffnung aufweist, liegt es ebenfalls im Rahmen der Erfindung, dass ein oder beide Enden des Gasstromverteilers verschlossen sind, wobei der Gasstromverteiler im letzteren Fall an anderer Stelle Ausströmöffnungen aufweist, etwa in der Mitte des Gasstromverteilers oder längs einer Geraden parallel zur Längserstreckungsrichtung des Gasstromverteilers.

Der Gasstromverteiler ist weiterhin vorteilhafterweise aus einem textilen Gewebe gebildet und weist darüber hinaus bevorzugt abschnittsweise mehrere Lagen des textilen Gewebes auf. Dadurch ist es möglich, den Gasstromverteiler etwa im Bereich der Befestigungsstrukturen zu verstärken, um ein Ausreißen oder Degradieren der Befestigungsstrukturen zu vermeiden. Des Weiteren ist es möglich, mehrere Materiallagen an Abschnitten des Gasstromverteilers anzuordnen, die sich in verbundenem Zustand des Gasstromverteilers mit dem Gasgenerator im Bereich von Ausströmöffnungen des Gasgenerators befinden und somit unmittelbar ausströmendem Gas ausgesetzt sind. Durch eine Mehrlagigkeit in diesen Bereichen wird eine Beschädigung des Gasstromverteilers durch aus dem Gasgenerator ausströmende Gase vermieden.

Weiterhin ist der erfindungsgemäße Gasstromverteiler in vorteilhafter Weise aus einem schlauchförmigen Material gebildet. Dabei werden die Befestigungsstrukturen, wie z.B. Befestigungslaschen oder Öffnungen zum Aufnehmen eines Gewindebolzens, bevorzugt durch Zuschneiden des schlauchförmigen Materials hergestellt. Bei Verwendung eines flächigen textilen Gewebes hingegen wird der Gasstromverteiler aus einem flächigen Zuschnitt erzeugt, der entsprechend aufgewickelt wird. Dabei können die Befestigungsstrukturen, insbesondere Befestigungslaschen, direkt in dem Zuschnitt vorgesehen sein. Auch kann der Zuschnitt so gewählt sein, dass mehrlagige Abschnitte des Gasstromverteilers entstehen oder der gesamte Gasstromverteiler mehrlagig ausgebildet ist.

Eine weitere, bevorzugte Ausgestaltung des Gasstromverteilers sieht vor, dass dieser zumindest abschnittsweise eine auf der Innenseite angebrachte Beschichtung aufweist. Dies dient insbesondere dazu, den Gasstromverteiler vor aus dem Gasgenerator ausströmenden heißen Gasen zu schützen. Die Beschichtung kann dabei etwa durch Aufdampfen eines metallischen Materials erfolgen oder aus einem hitzebeständigen Kunststoff gebildet sein.

In einem zweiten Aspekt der Erfindung ist ein Gassackmodul für ein Fahrzeug-Rückhaltesystem vorgesehen, das einen Gasgenerator und einen erfindungsgemäßen Gasstromverteiler aufweist. Der Gasstromverteiler umgibt dabei den Gasgenerator zumindest im Bereich von in dem Gasgenerator ausgebildeten Ausströmöffnungen. Hierdurch wird das aus Ausströmöffnungen des Gasgenerators ausströmende Gas verteilt.

Unter "Verteilen" soll hierbei auch verstanden werden, dass ausströmendes Gas überwiegend nur in eine Richtung abgelenkt wird. Das Verteilen erfolgt jedoch bevorzugt derart, dass durch den Gasstromverteiler mehrere Teilgasströme gebildet werden, die in unterschiedliche Richtungen abgeleitet werden. Insbesondere erfolgt durch den hülsenförmigen Gasstromverteiler ein Verteilen des vom Gasgenerator erzeugten Gasstroms lauf zwei entgegengesetzte Richtungen, wobei die jeweiligen Gasströme über in den Enden des Gasstromverteilers angeordnete Ausströmöffnungen abgeströmt werden. Bevorzugterweise ist der Gasstromverteiler über die oben genannten Befestigungsmittel mit dem Gasgenerator verbunden.

Die vorliegende Erfindung wird im Folgenden anhand von in Figuren dargestellten Ausführungsbeispielen näher beschrieben. Es zeigen:
- Fig. 1: eine erste Ausführungsform des erfindungsgemäßen Gasstromverteilers, der über Gewindebolzen an einem Gasgenerator befestigt ist,
- Fig. 2a und 2b: schematisch die Seiten- bzw. Frontansicht eines Gasstromverteilers gemäß der ersten Ausführungsform,
- Fig. 2c: einen Zuschnitt für einen Gasstromteilers gemäß der ersten Ausführungsform,
- Fig. 3: eine zweite Ausführungsform des erfindungsgemäßen Gasstromteilers, der über Befestigungslaschen an einem Gasgenerator angeklemmt ist,
- Fig. 4a und 4b: schematisch die Seiten- bzw. Frontansicht eines Gasstromteilers gemäß der zweiten Ausführungsform,
- Fig. 4c: schematisch einen Zuschnitt für einen Gasstromteilers gemäß der zweiten Ausführungsform,
- Fig. 5: eine dritte Ausführungsform, des erfindungsgemäßen Gasstromteilers, der sowohl über Befestigungslaschen als auch über Öffnungen zum Durchführen eines Gewindebolzens mit einem Gasgenerator verbunden ist,
- Fig. 6a und 6b: schematisch die Seiten- bzw. Frontansicht eines Gasstromteilers gemäß der dritten Ausführungsform,
- Fig. 6c: schematisch einen Zuschnitt für einen Gasstromteilers gemäß der dritten Ausführungsform.
- Fig. 7a: eine vierte Ausführungsform des erfindungsgemäßen Gasstromteilers, der aus einem mehrlagigen Gewebe gebildet ist,
- Fig. 7b: schematisch einen Zuschnitt für einen Gasstromteilers gemäß der vierten Ausführungsform,
- Fig. 8a: eine weitere Variante der Ausführungsform gemäß der Figur 7a,
- Fig. 8b: einen Zuschnitt für einen Gasstromverteilers gemäß der Figur 8a,
- Fig. 9a: eine weitere Variante der vierten Ausführungsform des erfindungsgemäßen Gasstromverteilers,
- Fig. 9b: einen Zuschnitt für einen Gasstromverteilers gemäß der Figur 9a,
- Fig. 10a: eine fünfte Ausführungsform des erfindungsgemäßen Gasstromverteilers, nach der die freien Enden zweier Befestigungslaschen miteinander verbunden sind,
- Fig. 10b: einen Zuschnitt für einen Gasstromverteilers gemäß der Figur 10a,
- Fig. 11a: eine weitere Variante der fünften Ausführungsform des erfindungsgemäßen Gasstromverteilers,
- Fig. 11b: schematisch einen Zuschnitt für einen Gasstromteilers gemäß der fünften Ausführungsform,
- Fig. 12a: eine sechste Ausführungsform des Gasstromverteilers in Ansicht von oben,
- Fig. 12b: die Hinteransicht des Gasstromverteilers der Figur 12a,
- Fig. 12c: die Ansicht der Innenseite eines abgewickelten Gasstromverteiler gemäß der sechsten Ausführungsform,
- Fig. 12d: die Ansicht der Außenseite eines abgewickelten Gasstromverteiler gemäß der sechsten Ausführungsform,
- Fig. 12e: eine Faltung der Abwicklung der Figuren 12c, 12d,
- Fig. 13a - 13d: Realisierungen verschiedener Ausführungsformen eines aus einem schlauchförmigen Material gebildeten Gasstromverteilers.

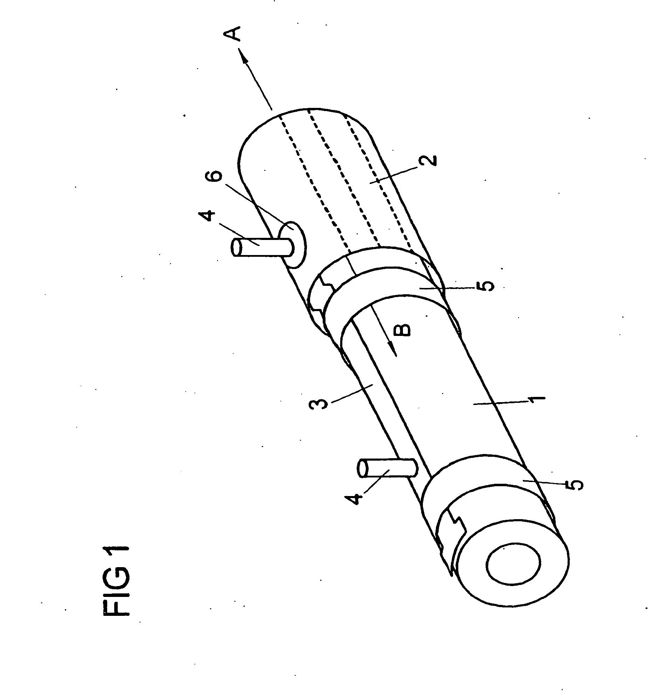

Die Figur 1 zeigt eine erste Ausführungsform des erfindungsgemäßen Gasstromverteilers. Dargestellt ist ein Gasstromverteiler 2, der mit einem Rohrgasgenerator 1 verbunden ist. An dem Rohrgasgenerator 1 ist eine Befestigungsleiste 3 mit Gewindebolzen 4 angeordnet ist, die mit Klemmringen 5, die den Gasgenerator 1 vollständig umgreifen, an diesem befestigt ist.

Der Gasstromverteiler 2 weist eine Öffnung 6 auf, durch die ein Gewindebolzen 4 der Befestigungsschiene 3 hindurch greift und somit den Gasstromverteiler 2 an dem Gasgenerator 1 fixiert.

Der Gasstromverteiler 2 ist aus einem textilen Gewebe gebildet und den Gasgenerator 1 abschnittsweise umgebend so angeordnet, dass er einen Abschnitt des Gasgenerators 1 abdeckt, in dem sich die Ausströmöffnungen (nicht dargestellt) des Gasgenerators 1 befinden. Dabei ist der Gasstromverteiler 2 im Bereich, der den Gasgenerator 1 umgibt, hohlzylindrisch geformt, mit einem im Vergleich zum Gasgenerator 1 größeren Querschnitt und ist koaxial zum Gasgenerator 1 angeordnet.

Möglich ist jedoch auch eine exzentrische Anordnung des Gasgenerators in Bezug auf den Gasstromverteiler. Ebenfalls kann der Gasstromverteiler im Bereich des Gasgenerators oder durchgehend flach geformt sein, etwa durch entsprechendes Zusammendrücken des flexiblen Materials bei Montage des Gasstromverteilers. In jedem Fall ist der Gastromverteiler 2 der Figur 1 in Bezug auf den Gasgenerator 1 zu den nicht dargestellten Ausströmöffnungen des Gasgenerators 1 beabstandet angeordnet, so dass Gas aus den Ausströmöffnungen ungehindert ausströmen kann.

Das dem Gasgenerator gegenüberliegende Ende des Gasstromverteilers kann insbesondere flach ausgebildet sein, um bei einer Montage eines Gassackmoduls mit dem Gasstromverteiler in einem Fahrzeugteil, insbesondere einem Sitz, keine Überwölbung zu erzeugen, die sich in dem Fahrzeugteil abzeichnen würde.

Des Weiteren ist der Gasstromverteiler 2 so ausgebildet, dass das aus dem Gasgenerator 1 ausströmende Gas in zwei Richtungen (gekennzeichnet durch die Linien A und B) aufgeteilt wird. Die in Figur 1 gezeigte Anordnung aus Gasstromverteiler 2 und Gasgenerator 1 kann im Innern eines Gassacks (nicht dargestellt), außerhalb eines Gassacks oder auch so an einem Gassack angeordnet sein, dass ein Abschnitt in den Gassack hineinragt, ein Teil der Anordnung sich jedoch außerhalb des Gassacks befindet.

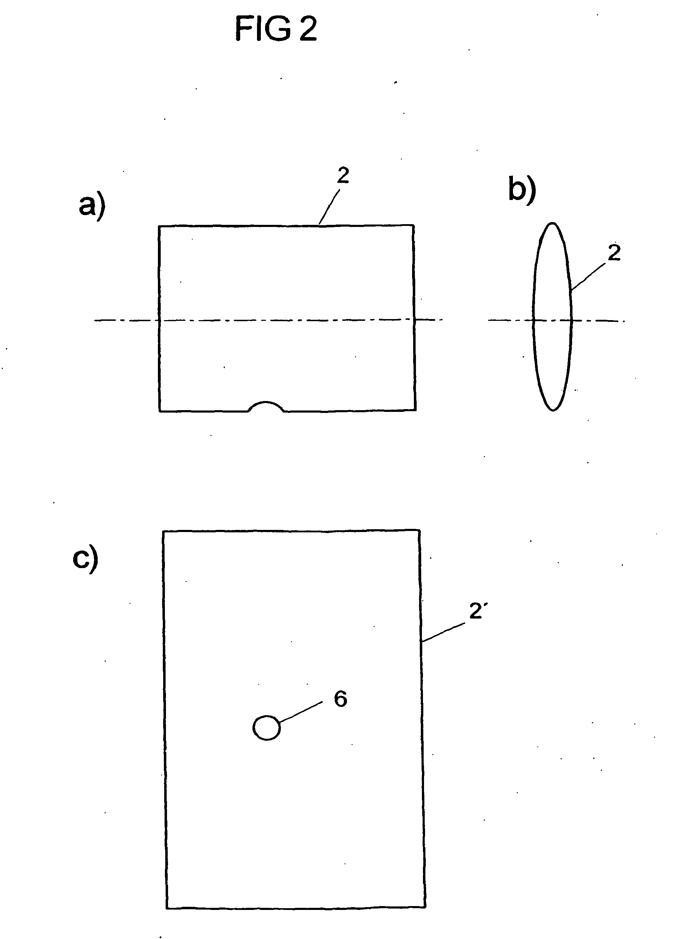

Die Figur 2a zeigt die schematische Seitenansicht eines Gasstromverteilers 2, der eine Öffnung 6 zur Aufnahme eines Gewindebolzens oder eines sonstigen Befestigungsmittels zum Verbinden mit einem Gasgenerator (nicht dargestellt) aufweist. Figur 2b zeigt schematisch die Vorderansicht des Gasstromverteilers 2 der Figur 2a. Man erkennt, dass der Gasstromverteiler 2 einen elliptischen Querschnitt aufweist. Diese Formgebung kann in einfacher Weise hergestellt werden, da der Gasstromverteiler 2 aus einem flexiblen Material gebildet ist.

Dadurch ist es möglich, dass der Gasstromverteiler an einem Ende zum Verbinden mit einem Rohrgasgenerator einen nahezu hohlzylindrischen Querschnitt aufweist, während das gegenüberliegende Ende durch Zusammendrücken flach geformt ist, d.h. mit einem ovalen Querschnitt. Durch die flache Ausbildung eines Abschnitts des Gasstromverteilers wird beim Einbau des Gasstromverteilers, zum Beispiel in einen Fahrzeugsitz, eine Überwölbung vermieden, die sich im Fahrzeugsitz abzeichnen würde.

Die Figur 2c zeigt die Abwicklungsdarstellung des Gasstromverteilers 2 der Figur 2a. Es ist zu erkennen, dass der Gasstromverteiler 2 der Figuren 2a, 2b aus einem rechteckigen Zuschnitt 2' eines flexiblen Materials herstellbar ist, wobei in den Zuschnitt 2' eine Öffnung 6 zur Aufnahme eines Gewindebolzens eingebracht ist.

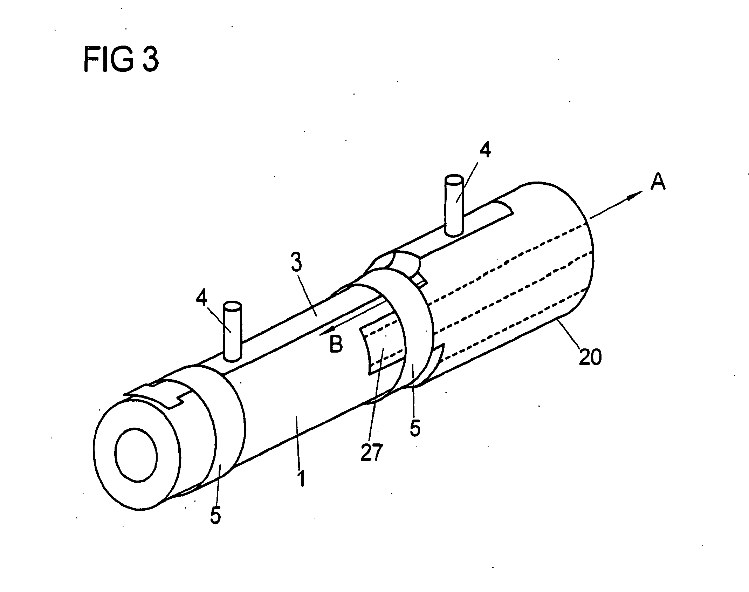

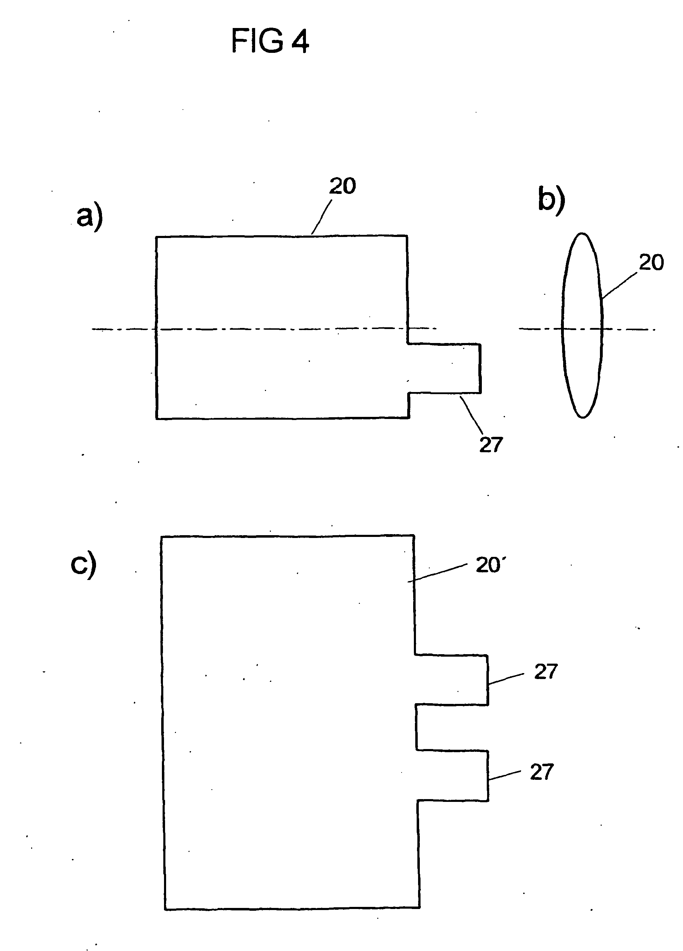

Die Figuren 3 und 4 beziehen sich auf eine zweite Ausführungsform des erfindungsgemäßen Gasstromverteilers. In der Figur 3 ist ähnlich wie in Figur 1 ein Rohrgasgenerator 1 gezeigt, der mit einem Gasstromverteiler 20 verbunden ist. Mit dem Gasgenerator 1 ist mittels zweier Klemmringe 5 eine Befestigungsschiene 3 verbunden, die Gewindebolzen 4 aufweist.

Im Unterschied zur Ausführungsform der Figur 1 weist der Gasstromverteiler 20 als Befestigungsstruktur zum Verbinden mit einem Gasgenerator keine Öffnung auf, sondern Befestigungslaschen 27. Dabei sind zwei Befestigungslaschen 27 an dem Gasstromverteiler 20 angeordnet, von denen nur eine in der Darstellung der Figur 3 zu sehen ist. Die Befestigungslaschen 27 sind über einen Klemmring 5 mit dem Gasgenerator 1 verbunden, wobei der Klemmring 5 gleichzeitig auch zur Fixierung der Befestigungsschiene 3 dient.

Der Gasstromverteiler 20 ist ähnlich wie der Gasstromverteiler der Figur 1 abschnittsweise über das Ausströmende des Gasgenerators 1 geschoben, wodurch durch nicht dargestellte Ausströmöffnungen des Gasgenerators 1 austretendes Gas in zwei Abströmrichtungen, die etwa parallel zum Gasgenerator 1 verlaufen, aufgeteilt wird.

Die Gasgenerator-Gasstromverteiler-Baugruppe der Figur 3 kann über die Gewindebolzen 4 an einem Gassack, einem Fahrzeugsitz oder einem Teil einer Fahrzeugkarosserie befestigt werden (nicht dargestellt).

Figur 4a zeigt die schematische Seitenansicht eines Gasstromverteilers 20 mit Befestigungslaschen 27 gemäß der zweiten Ausführungsform der Erfindung. Der Gasstromverteiler 20 weist dabei einen elliptischen Querschnitt auf (vergleiche Figur 4b).

Der Figur 4c kann entnommen werden, dass die zweite Ausführungsform des Gasstromverteilers gemäß den Figuren 3 und 4a bis 4b aus einem rechteckigen Zuschnitt 20' eines flexiblen Materials erzeugt werden kann. Der Zuschnitt 20' weist dabei bereits Befestigungslaschen 27 auf.

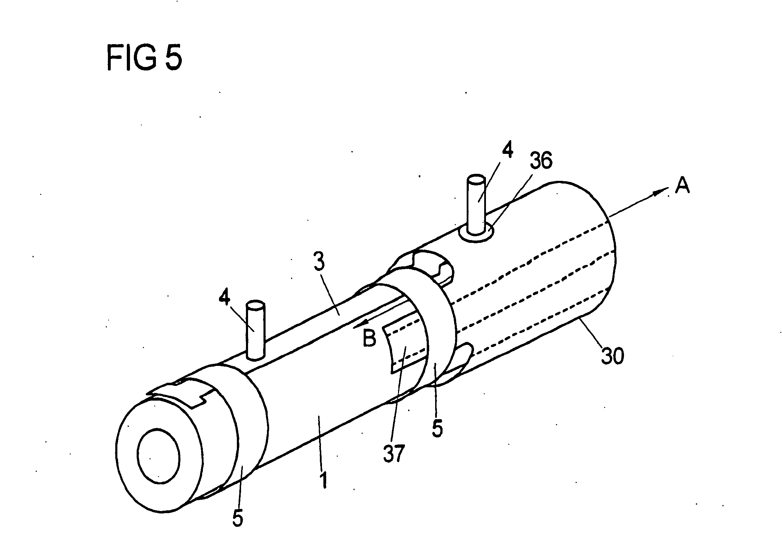

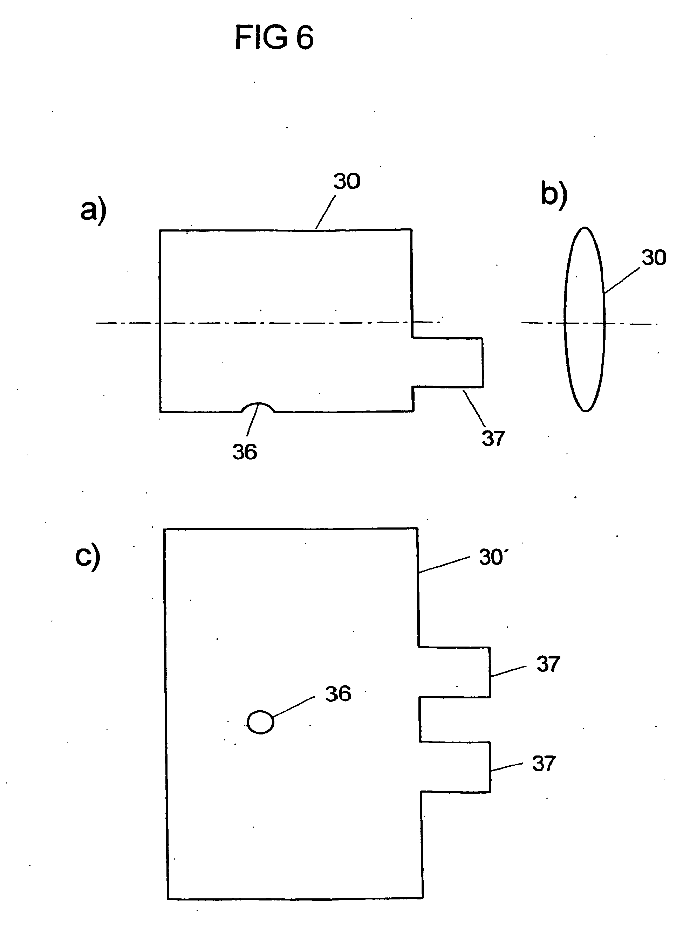

Die Figuren 5 und 6 betreffen eine dritte Ausführungsform des erfindungsgemäßen Gasstromverteilers. Die Figur 5 zeigt einen mit einem Gasgenerator 1 verbundenen Gasstromverteiler 30. Der Gasgenerator 1 ist analog zu den Figuren 1 und 3 als Rohrgasgenerator ausgebildet und weist eine Befestigungsschiene 3 auf, die über Klemmringe 5 mit dem Gasgenerator 1 verbunden ist. Die Befestigungsschiene 3 weist dabei wie in den Ausführungsbeispielen der Figuren 1 und 3 Gewindebolzen 4 auf.

Im Unterschied zu den vorangegangenen Ausführungsformen der Erfindung weist der Gasstromverteiler 30 jedoch sowohl eine Öffnung 36 als auch Befestigungslaschen 37 auf. Somit kombiniert der Gasstromverteiler 30 der Figur 5 zwei Arten von Befestigungsstrukturen, nämlich eine Öffnung 36, die ein Gewindebolzen 4 durchgreift, und Befestigungslaschen 37, über die der Gasstromverteiler 30 an dem Gasgenerator 1 angeklemmt ist. Das Anklemmen des Gasstromverteilers 30 erfolgt dabei über die Klemmringe 5, die den Gasgenerator 1 komplett umgreifen und sowohl die Befestigungsschiene 3 als auch die Befestigungslaschen 37 an dem Gasgenerator 1 fixieren.

Der Gasstromverteiler 30 kann im gezeigten Ausführungsbeispiel ähnlich wie die Ausführungsformen der Figuren 1 und 3 an dem dem Gasgenerator 1 abgewandten Ende zusammengedrückt sein, um möglichst Platz sparend etwa in einem Fahrzeugsitz angeordnet werden zu können. Der Gasstromverteiler 30 kann jedoch auch durchgehend zusammengedrückt sein, also über die gesamte Länge einen ovalen Querschnitt aufweisen, wobei er jedoch im Bereich zumindest einiger Ausströmöffnungen (nicht dargestellt) des Gasgenerators 1 beabstandet zu den Ausströmöffnungen angeordnet ist.

Der in der Figur 5 gezeigte Gasstromverteiler 30 ermöglicht wie die Gasstromverteiler der Figuren 1 und 3 ein Aufteilen eines vom Gasgenerator 1 ausgehenden Gasstromes auf zwei Richtungen A und B und somit ein gezieltes Verteilen des vom Gasgenerator 1 ausgehenden Gasstromes in einen Gassack.

Die Figur 6a stellt schematisch die Seitenansicht eines Gasstromverteilers 30 dar, der sowohl eine Öffnung 36 zur Aufnahme eines Gewindebolzens als auch Befestigungslaschen 37 zum Anklemmen an einen Gasgenerator (nicht dargestellt) aufweist. Der Gasstromverteiler 30 ist wiederum aus einem flexiblen Material gebildet, so dass durch Zusammendrücken ein elliptischer Querschnitt entsteht, wie in Figur 6b gezeigt. Dabei kann die elliptische Querschnittsfläche sich wiederum über die gesamte Länge des Gasstromverteilers 30 erstrecken oder nur ein Endabschnitt des Gasstromverteilers 30 einen elliptischen Querschnitt aufweisen, während der gegenüberliegende Endabschnitt nahezu hohlzylindrisch ausgeformt werden kann, um eine bessere Verbindung insbesondere zu einen Rohrgasgenerator zu ermöglichen.

Figur 6c zeigt schematisch die Abwicklungsdarstellung der in den Figuren 6a und 6b gezeigten Gasstromverteilers 30. Der Gasstromverteiler 30 kann aus einem Zuschnitt 30' erzeugt werden, der bereits eine Öffnung 36 sowie zwei Befestigungslaschen 37 zum Verbinden des Gasstromverteilers 30 mit einem Gasgenerator 30 aufweist.

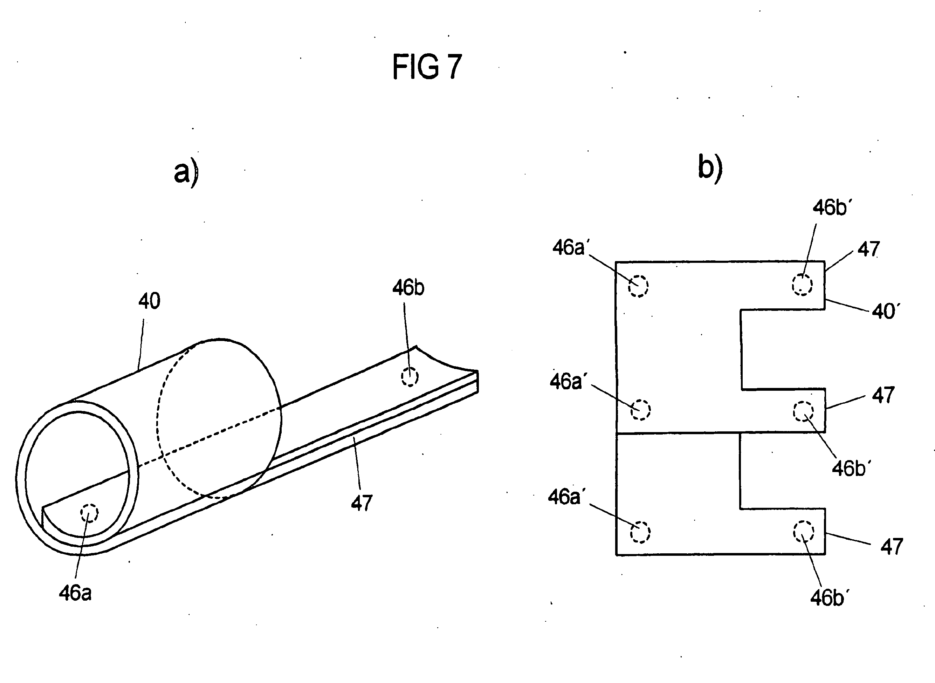

Die Figur 7a zeigt eine vierte Ausführungsform des erfindungsgemäßen Gasstromverteilers. Hierbei ist ein Gasstromverteiler 40 aus einem flächigen Material, insbesondere einem textilen Gewebe, gebildet, wobei der Gasstromverteiler 40 abschnittsweise mehrere Lagen des flächigen Materials aufweist. Der Gasstromverteiler 40 weist als Befestigungsstrukturen zum Verbinden mit einem Gasgenerator (nicht dargestellt) sowohl Öffnungen 46 als auch eine Befestigungslasche 47 auf.

Hierbei ist eine Öffnung 46b im Bereich der Befestigungslasche 47 angeordnet, so dass diese sowohl über einen Gewindebolzen, der an einem Gasgenerator angeordnet ist, als auch durch Anklemmen mit einem Klemmring an einem Gasgenerator befestigbar ist.

Die Besonderheit der Ausführungsform gemäß der Figur 7a ist jedoch, dass im Bereich der Öffnung 46a und der Befestigungslasche 47 mehrere Materiallagen angeordnet sind. Hiermit ist eine stabile Verbindung des Gasstromverteilers 40 mit einem Gasgenerator (nicht dargestellt) möglich, da durch die mehreren Materiallagen eine Ausreißen der Öffnungen 46a, 46b etwa bei Belastung der durch die Öffnungen 46a, 46b geführten Gewindebolzen vermieden wird.

In Figur 7b ist ein Zuschnitt 40' aus einem flächigen Material gezeigt, aus dem der Gasstromverteiler 40 der Figur 7a gebildet werden kann. Es ist zu erkennen, dass der Zuschnitt 40' bereits Öffnungen 46a' und 46b' aufweist, die nach Herstellen des Gasstromverteilers 40 durch Aufwickeln des Zuschnitts 40' miteinander fluchten. Des Weiteren weist der Zuschnitt 40' bereits laschenförmige Abschnitte 47 auf, die im fertigen Gasstromverteiler übereinander liegen und somit eine reißfeste Befestigungslasche 47 zum Verbinden des Gasstromverteilers mit einem Gasgenerator bilden.

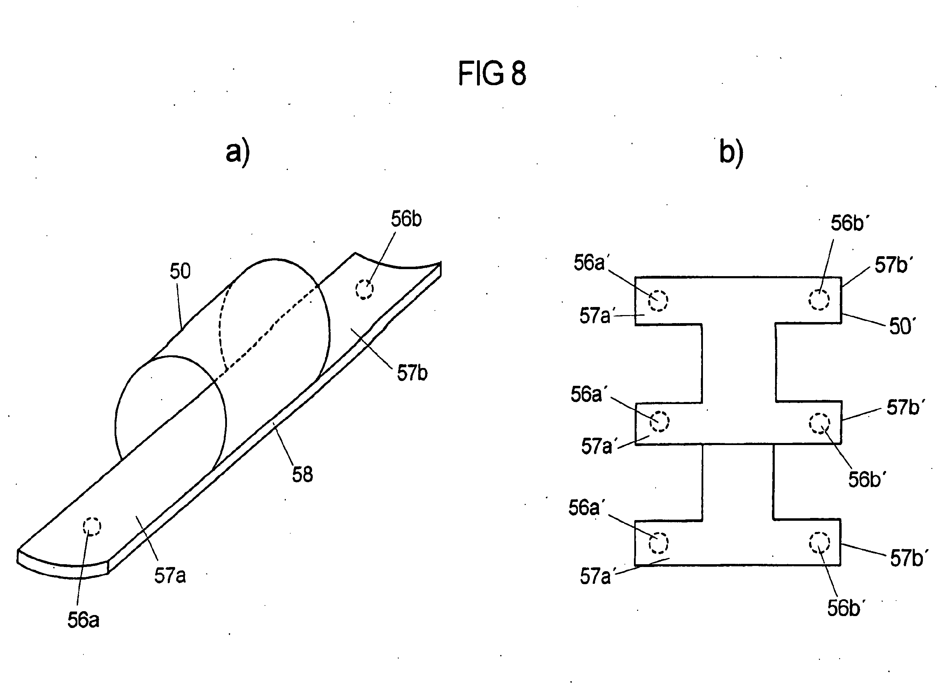

Die Figur 8a betrifft eine weitere Variante der vierten Ausführungsform des erfindungsgemäßen Gasstromverteilers. Hierbei sind die Befestigungsstrukturen analog zur Figur 7a aus einem mehrlagigen Material gebildet. Im Unterschied zum Gasstromverteiler der Figur 7a weist der Gasstromverteiler 50 der Figur 8a jedoch zwei Befestigungslaschen 57a und 57b auf, die an gegenüberliegenden Enden des Gasstromverteilers 50 angeordnet sind.

Die beiden Befestigungslaschen 57a, b weisen des Weiteren jeweils eine Öffnung 56a, b auf, durch die jeweils ein Gewindebolzen eines Gasgenerators geführt werden kann. Diese Ausbildung des Gasstromverteilers 50 ermöglicht die mittige Anordnung des Gasstromverteilers 50 an einem Gasgenerator, der entsprechend mittig angeordnete Ausströmöffnungen aufweist.

Wie der schematischen Darstellung der Figur 8a zu entnehmen, sind die Befestigungslaschen 57a, b mehrlagig ausgebildet, so dass deren Reißfestigkeit erhöht ist. Gleichzeitig ist auch ein Abschnitt 58 des Gasstromverteilers 50 mehrlagig ausgebildet, der gegenüber Ausströmöffnungen eines Gasgenerators angeordnet werden kann. Durch die abschnittsweise Mehrlagigkeit des Gasstromverteilers 50 kann eine Zerstörung des Gasstromverteilers durch einen aus Ausströmöffnungen eines Gasgenerators ausströmenden Gasstrom vermieden werden, in dem die mehrlagigen Abschnitte im Bereich von Ausströmöffnungen des Gasgenerators angeordnet werden.

In Figur 8b ist zu sehen, dass der Gasstromverteiler 50 der Figur 8a aus einem Zuschnitt 50' eines flächigen Materials gebildet werden kann. Dabei weist der Zuschnitt 50' an zwei Seiten laschenartige Fortsätze 57a' und 57b' auf, die im fertigen Gasstromverteiler übereinander liegen und die Befestigungslaschen 57a bzw. 57b bilden. Des Weiteren sind Öffnungen 56a' und 56b' in den laschenförmigen Fortsätzen 57a' bzw. 57b' angeordnet, die im fertigen Gasstromverteiler miteinander fluchten und die Befestigungsöffnungen 56a bzw. 56b der Figur 8a bilden.

Mit dem dargestellten Zuschnitt 50' entsteht ein Gasstromverteiler, dessen hohlzylindrischer Bereich zweilagig ist und die Befestigungslaschen dreilagig ausgebildet sind. Natürlich kann der Zuschnitt auch so beschaffen sein, dass nur die Befestigungslaschen des aus dem Zuschnitt gebildeten Gastromverteilers mehrlagig sind. Dazu würde der Zuschnitt der Figur 8b beispielsweise so verkleinert, dass an zwei Seiten des Zuschnitts jeweils nur zwei Befestigungslaschen vorhanden sind, die nach einem einmaligen Aufwickeln des Zuschnitts übereinander liegen.

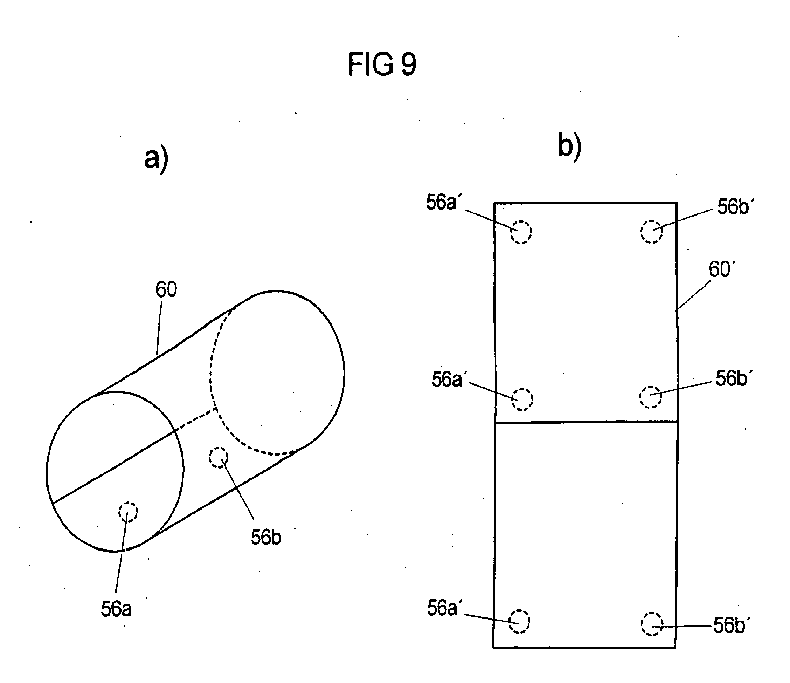

Eine weitere Variante der vierten Ausführungsform des erfindungsgemäßen Gasstromverteilers zeigt die Figur 9a. Der dargestellte Gasstromverteiler 60 weist Öffnungen 56a und 56b, die zum Befestigen des Gasstromverteilers 60 an einem Gasgenerator (nicht dargestellt) dienen. Hierbei ist der Gasstromverteiler 60 wiederum aus einem flächigen Material gebildet, das im Bereich der Befestigungsöffnung 56 mehrlagig ausgebildet ist. Der Gasstromverteiler 60 weist eine derartige Länge auf, dass sich der an einem Gasgenerator angeordnete Gasstromverteiler sowohl über mittig als auch im Anfangs- bzw. Endbereich des Gasgenerator angeordnete Ausströmöffnungen erstreckt. Vorteilhafterweise wird der Gasstromverteiler 60 so an einem Gasgenerator angeordnet, dass der mehrlagige Bereich des Gasstromverteilers 60 im Bereich der Ausströmöffnungen des Gasgenerators angeordnet ist, um den Gasstromverteiler vor Beschädigung oder gar Zerstörung durch die aus dem Gasgenerator ausströmenden Gase besonders zu schützen.

Die Figur 9b zeigt schematisch einen Zuschnitt 60', aus denen der Gasstromverteiler 60 der Figur 9a herstellbar ist. Der Zuschnitt 60' aus einem flexiblen Material weist hierbei Öffnungen 56a' bzw. 56b' auf, die beim Herstellen eines Gasstromverteilers durch Aufwickeln des Zuschnitts 60' miteinander fluchten und die Befestigungsöffnungen 56a bzw. 56b der Figur 9a ausbilden.

Hierbei ist natürlich auch möglich, einen solchen Zuschnitt zur Herstellung eines Gasstromverteilers zu wählen, der zur Herstellung eines Gasstromverteilers nicht nur einmal? sondern mehrfach gewickelt wird. Hierdurch entstünde ein Gasstromverteiler, der nicht nur in den Bereichen der Befestigungsstrukturen oder den gegenüber den Ausströmöffnungen eines Gasgenerators anzuordnenden Abschnitten durch mehrere Materiallagen verstärkt ist, sondern insgesamt mehrlagig ausgebildet wäre und somit eine stabilere Struktur aufweisen würde.

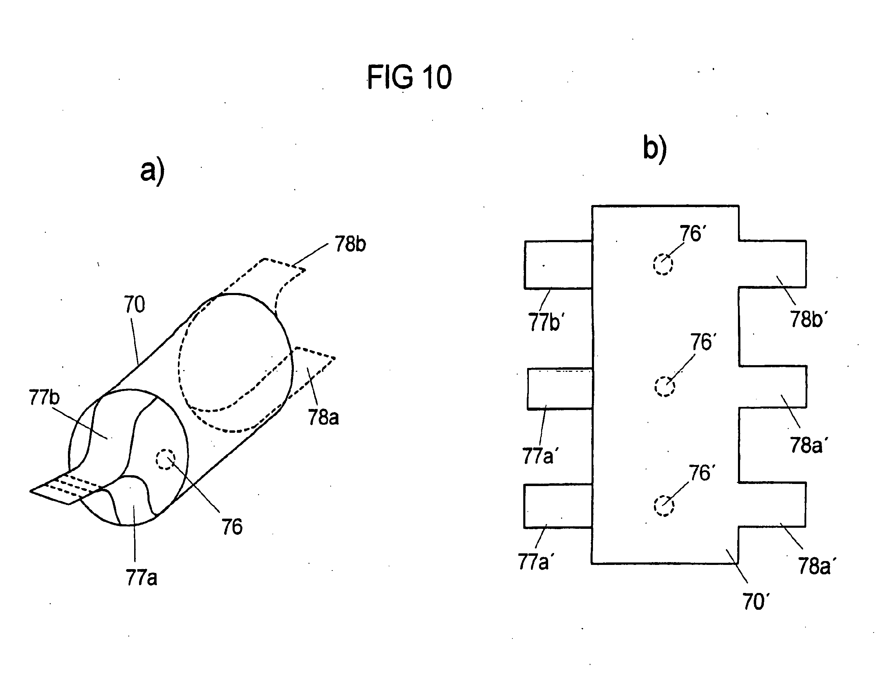

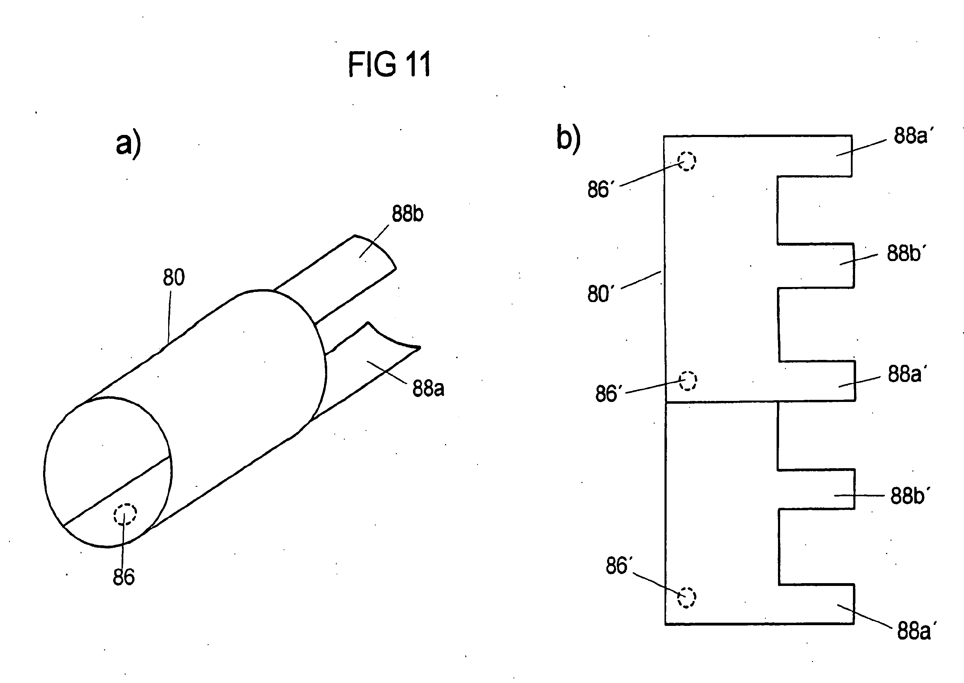

Eine fünfte Ausführungsform des erfindungsgemäßen Gasstromverteilers ist in den Figuren 10 und 11 dargestellt. Die Figur 10a zeigt einen Gasstromverteiler 70 aus einem flächigen Material, in dessen Mitte eine Befestigungsöffnung 76 angeordnet ist, die mit an einem Gasgenerator (nicht dargestellt) angeordneten Gewindebolzen verbindbar ist. Darüber hinaus weisen die beiden Enden des Gasstromverteilers 70 jeweils zwei Befestigungslaschen 77a, 77b und 78a, 78b auf, wobei die freien Enden der Befestigungslaschen 77a, 77b eines Endes des Gasstromverteilers 70 miteinander verbunden sind.

Das Verbinden der.Befestigungslaschen 77a und 77b dient dazu, den Gasfluss durch den Gasstromverteiler 70 zu steuern. Durch das Verbinden der beiden gegenüberliegenden Befestigungslaschen 77a, 77b ergibt sich beispielsweise eine weitere Aufteilung des vom Gasstromverteiler 70 in Richtung des die Befestigungslaschen 77a, 77b aufweisenden Endes des Gasstromverteilers 70 geleiteten Gasstroms. Es ist auch möglich, dass an einer oder an beiden Stirnseiten des Gasstromverteilers 70 neben den zwei dargestellten Befestigungslaschen 77a, 77b weitere Befestigungslaschen angeordnet sind, so dass das Austreten des an Gasstroms an einer Seite des Gasstromverteilers 70 stark reduziert bzw. verhindert wird.

Die Befestigungslaschen 77a, 77b bzw. 78a, 78b können einlagig oder auch mehrlagig ausgebildet sein. Auch kann der Gasstromverteiler 70 einlagig ausgebildet sein, kann aber auch beispielsweise im Bereich der Ausströmöffnung des Gasgenerator anzuordnenden Abschnitte mehrere Materiallagen umfassen, um beständiger gegen den aus den Ausströmöffnungen ausströmenden Gasstrom zu sein.

Figur 10b zeigt einen Zuschnitt für einen Gasstromverteiler gemäß der Figur 10a, der gegenüberliegende laschenartige Fortsätze 77 a, 77b' sowie 78a, 78b' aufweist. Hierbei ist der Zuschnitt 70' so ausgebildet, dass im fertigen Gasstromverteiler jeweils eine Befestigungslasche 77a bzw. 78a mehrlagig gebildet ist, während die dieser Lasche jeweils gegenüberliegende Lasche 77b bzw. 77a einlagig ist. Darüber hinaus weist der Zuschnitt 70' Öffnungen 76' auf, die nach dem Aufwickeln des Zuschnitts fluchten und die Befestigungsöffnung 76 bilden.

Natürlich kann der Zuschnitt zum Herstellen des Gasstromverteilers auch so gestaltet sein, dass jeweils beide Befestigungslaschen einem Ende des Gasstromverteilers entweder mehrlagig oder einlagig sind.

Ein solches Beispiel zweier mehrlagiger Befestigungslaschen zeigt die Figur 11a. Ein Gasstromverteiler 80 weist an einem Ende zwei Befestigungslaschen 88a, 88b auf, die jeweils mehrlagig gebildet sind. Zusätzlich ist im Gasstromverteiler 80 wiederum eine Öffnung 86 zu dessen Befestigung an einem Gewindebolzen eines Gasgenerators angeordnet.

Figur 11b zeigt einen Zuschnitt 80', aus dem durch mehrfaches Wickeln der Gasstromverteiler der Figur 11a erzeugt werden kann. Hierbei weist der Zuschnitt 80' Öffnungen 86' auf, die beim Aufwickeln des Zuschnitts 80' zu einem Gasstromverteiler miteinander fluchten und die Befestigungsöffnung 86 der Figur 11a bilden: Dieser Bereich des Gasstromverteilers weist somit drei Materiallagen auf. Die den Öffnungen 86a' gegenüberliegende Seite des Zuschnitts 80' weist insgesamt fünf laschenartige Fortsätze 88a', 88b' auf, von denen drei Fortsätze 88a' bzw. zwei Fortsätze 88b' im fertigen Gasstromverteiler übereinander liegen und eine dreifach bzw. eine zweifach verstärkte Befestigungslasche 88a bzw. 88b bilden.

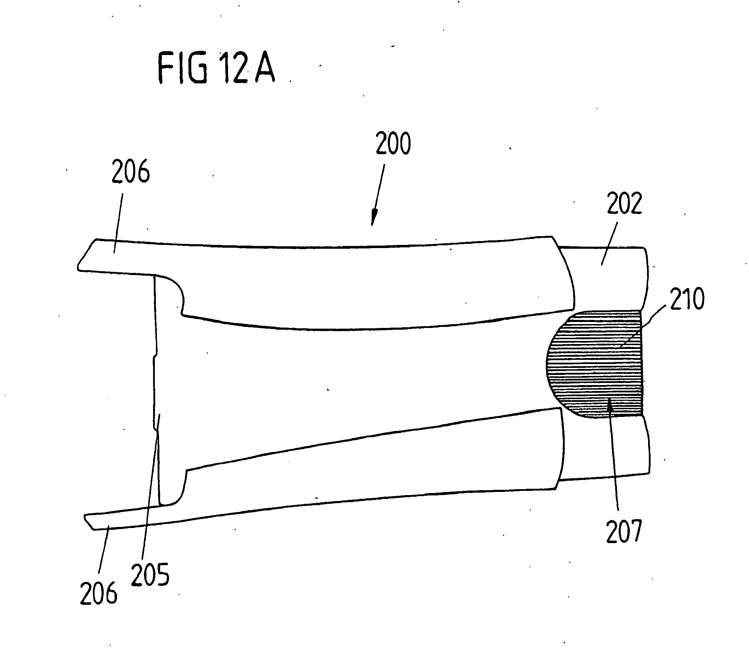

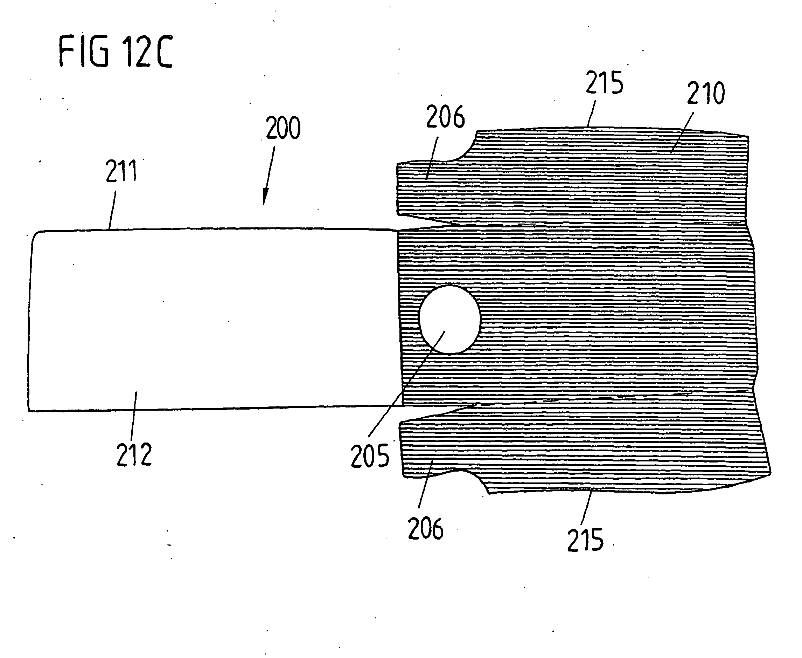

Die Figuren 12a bis 12e betreffen eine sechste Ausführungsform des Gastromverteilers. Figur 12a zeigt einen Gasstromverteiler 200 von oben, der an einem Ende eine Befestigungslasche 202 aufweist. Ein dem Gasstromverteiler zugeordneter Gasgenerator (nicht dargestellt) würde sich unterhalb der Befestigungslasche 202 in den Gasstromverteiler 200 hinein erstrecken. Zur Befestigung des Gasstromverteilers 200 an einem Gasgenerator kann die Befestigungslasche 202 z.B. über einen Klemmring mit dem Gasgenerator verbunden werden. Der Aufbau des Gasstromverteilers wird anhand der Abwicklungsdarstellungen der Figuren 12c-12e genauer erläutert.

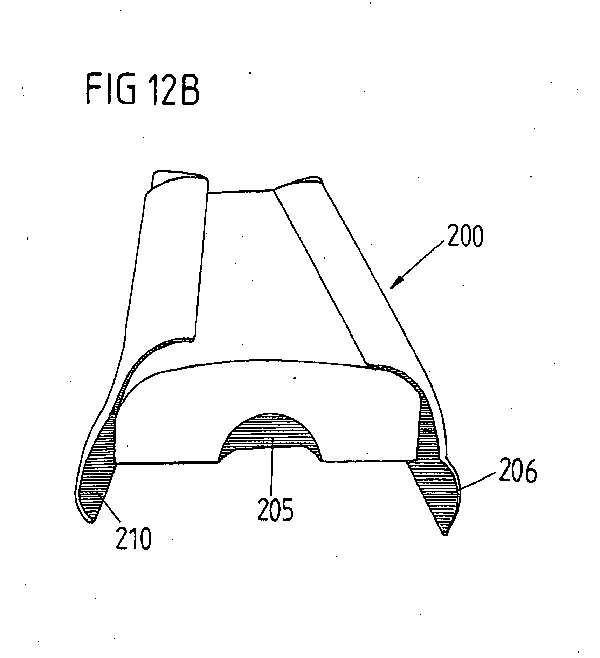

Der Gasstromverteiler 200 weist weiterhin an der Befestigungslasche 202 einen Ausströmbereich 207 auf, in dem eine darunterliegende Beschichtung 210 sichtbar ist. Weiterhin sind an dem der Befestigungslasche 202 gegenüberliegenden Ende eine Ausströmöffnung 205 sowie Strömungslaschen 206 angeordnet, die zum Leiten eines aus der Ausströmöffnung 205 austretenden Gasstroms dienen. Die Ausströmöffnung 205 ist ebenfalls in der Hinteransicht des Gasstromverteilers 200 gemäß der Figur 12b dargestellt.
Die Figur 12c zeigt die Innenseite des abgewickelten Gasstromverteilers 200 der Figuren 12a und 12b. Die Innenseite des Gasstromverteilers ist mit einer (schraffiert dargestellten) Beschichtung 210 versehen. Zur Herstellung des Gasstromverteilers 200 wird ein Abschnitt 211 sowie die beiden Seitenlaschen 215 auf den übrigen Gasstromverteiler 200 umgefaltet. Der Abschnitt 211 des Gasstromverteilers 200 ist mit einer zusätzlichen Materiallage 212 versehen, die die Beschichtung 210 in diesem Bereich verdeckt. Die zusätzliche Materiallage 212 kann dabei z.B. einstückig mit dem übrigen Gasstromverteiler ausgebildet sein und beispielsweise durch Umfalten eines Abschnitts der den Gasstromverteiler bildenden Materiallage erzeugt werden.

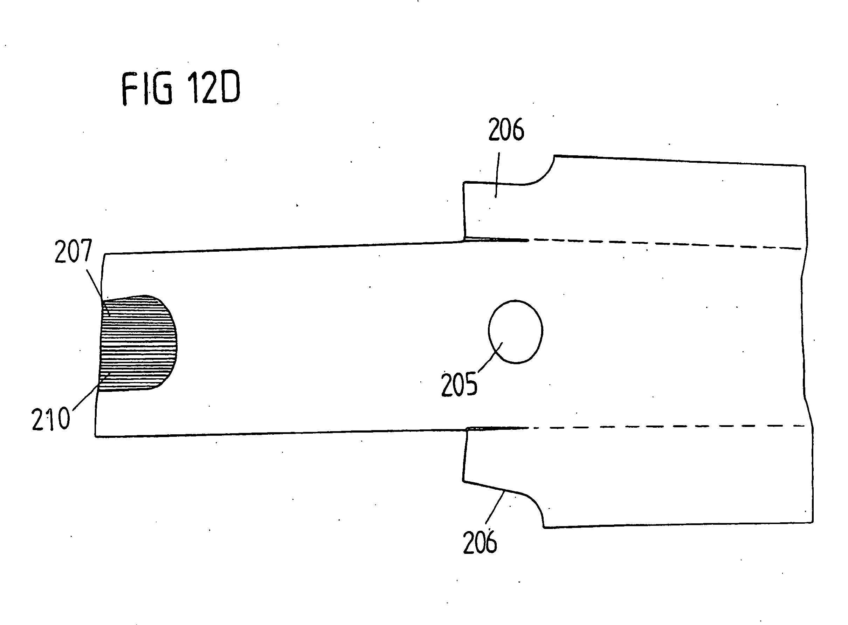

Die Figur 12d zeigt die Außenseite des Gasstromverteilers 200 in abgewickeltem Zustand. Der Gasstromverteiler 200 weist im Bereich des umzufaltenden Abschnitts 211 eine Aussparung 207 auf, wodurch die darunterliegende Beschichtung 210 sichtbar ist. Die Aussparung 207 bildet einen Gasausströmbereich.

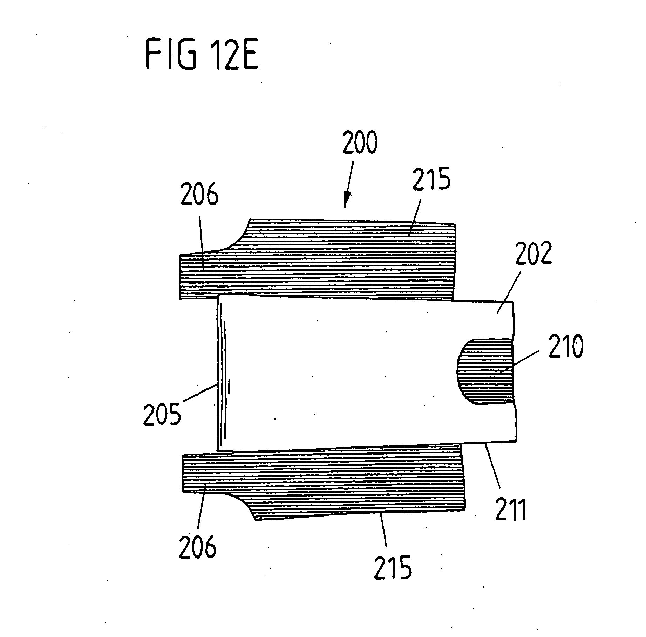

Die Figur 12e zeigt einen Zwischenschritt bei der Herstellung des Gasstromverteilers 200. Der Abschnitt 211 (vgl. Figur 12c) ist so auf den übrigen Bereich des Gasstromverteilers umgefaltet, dass er teilweise über den ihm gegenüberliegenden Seitenrand des Gasstromverteilers herausragt. Dieser herausragende Bereich des Abschnitts 211 bildet die Befestigungslasche 202.

In einem weiteren Schritt bei der Herstellung des Gasstromverteilers 200 werden die beiden Seitenlaschen 215 auf den bereits umgefalteten Abschnitt 211 gefaltet, so dass der fertige Gasstromverteiler 200 einen Hohlkörper darstellt. Ein Gasgenerator kann an dem die Befestigungslasche 202 aufweisenden Ende des Gasstromverteilers 200 in diesen eingeführt werden. Mittels der Befestigungslasche 202 wird der Gasstromverteiler an dem Gasgenerator befestigt.

Es sei erwähnt, dass die Befestigungslaschen der obigen Ausführungsbeispiele zwar als vom Rest eines Gasstromverteilers hervorstehende Fortsätze gebildet sind. Es ist jedoch darüber hinaus auch möglich, Befestigungslaschen vorzusehen, die nicht als hervorstehender Fortsatz ausgeführt sind, sondern z.B. durch Ein- oder Zuschneiden eines Endbereichs eines Gasstromverteilers gebildet sind. Die Befestigungslaschen schließen in diesem Fall mit dem Ende des Gasstromverteilers, an dem sie gebildet sind, ab. Ein Gasgenerator kann an derartigen Befestigungslaschen z.B. ebenfalls mittels eines Klemmrings angeklemmt werden.

Zusätzlich kann gegenüber der Befestigungslasche eine Öffnung vorgesehen sein. Dadurch können zum Anklemmen eines Gasstromverteilers an der Befestigungslasche Klemmringe verwendet werden, an denen ein Gewindebolzen angeordnet ist. Mit einem derartigen Klemmring würde ein Gasstromverteiler einerseits durch Anklemmen an die Befestigungslasche und andererseits über den durch die gegenüber der Befestigungslasche angeordnete Öffnung geführten Gewindebolzen an einem Gasgenerator befestigt.

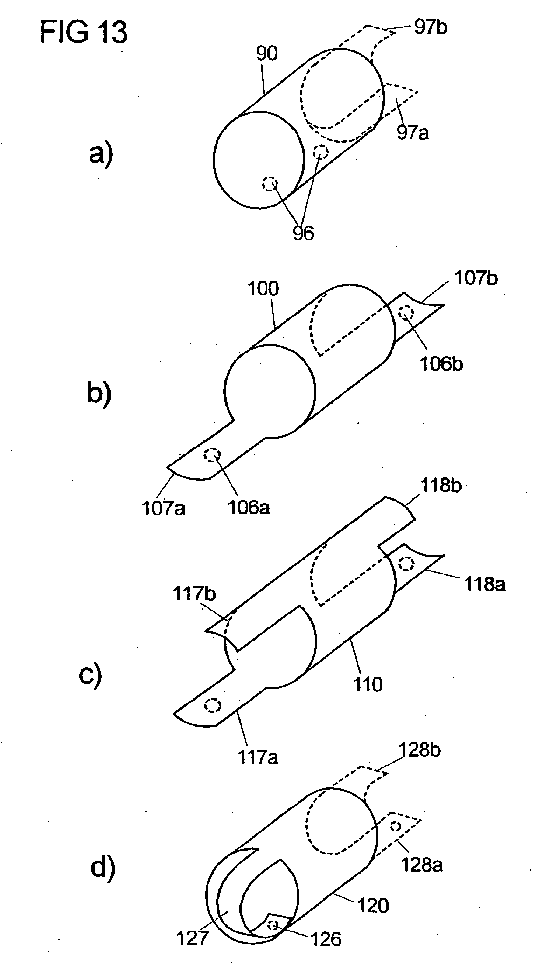

In den Figuren 13a bis 13d sind Ausführungsvarianten des erfindungsgemäßen Gasstromverteilers gezeigt, bei denen der Gasstromverteiler nicht wie in den vorangegangenen Figuren aus einem flächigen Material, sondern aus einem schlauchförmigen Material gebildet ist. Die Herstellung des Gasstromverteilers erfolgt dabei insbesondere durch Zuschneiden des schlauchförmigen Materials.

Die Figur 13a zeigt beispielsweise einen Gasstromverteiler 90 mit Befestigungsöffnungen 96 sowie Befestigungslaschen 98a, 98b. Diese Ausführung des Gasstromverteilers 90 entspricht von der Geometrie her dem Ausführungsbeispiel der Figur 11a.

Eine weitere Variante zeigt die Figur 13b, nach der ein Gässtromverteiler 100 an gegenüberliegenden Stirnseiten jeweils eine Befestigungslasche 107a mit einer Befestigungsöffnung 106a bzw. eine Befestigungslasche 107b mit einer Befestigungsöffnung 106b aufweist. Diese Variante entspricht geometrisch der Ausführung des Gasstromverteilers gemäß der Figur 8a.

Gemäß der Figur 13c weist ein Gasstromverteiler 110 jeweils an beiden Enden Befestigungslaschen 117a, 117b bzw. 118a, 118b auf, die auch, wie in der Figur 10a für das flächige Material gezeigt, miteinander verbunden sein können.

Eine weitere Variante eines aus einem schlauchförmigen Material gebildeten Gasstromverteilers, zeigt die Figur 13d. Hier weist ein Gasstromverteiler 120 an einem Ende eine Befestigungslasche 127 auf, deren freies Ende umgebogen und dem festen Ende der Befestigungslasche 127 gegenüber mit dem Gasstromverteiler 120 verbunden ist. Zudem weist sowohl der Gasstromverteiler 120 als auch das freie Ende der Befestigungslasche 127 Öffnungen auf, die beim Befestigen des freien Endes der Befestigungslasche 127 an dem Gasstromverteiler 120 miteinander fluchten und eine Befestigungsöffnung 126 bilden. Des Weiteren weist der Gasstromverteiler 120 an der zweiten Stirnseite weitere Befestigungslaschen 128a und 128b zum Verbinden des Gasstromverteilers 120 an einem Gasgenerator auf.

### Bezugszeichenliste

- 1: Gasgenerator
- 2, 20, 30, 40, 50, 60, 70,:
- 80, 90, 100, 110, 120, 200: Gasstromverteiler
- 3: Befestigungsschiene
- 4: Gewindebolzen
- 5: Klemmring
- 6, 46a, 46b, 56a, 56b, 76,:
- 86, 96, 106a, 106b, 126: Befestigungsöffnung
- 2', 20', 30', 40', 50', 60', 70', 80': Zuschnitt für Gasstromverteiler
- 27, 37, 47, 57a, 57b, 77a,:
- 77b, 78a, 78b, 88a,:
- 88b, 97a, 97b, 107a, 107b,:
- 127, 128a, 128b, 202: Befestigungslaschen
- 27', 37', 47', 57', 77a',:
- 77b', 78a', 78b', 88a', 88b': laschenartige Fortsätze

## Patentansprüche

1. Gasstromverteiler für ein Gassackmodul zum gezielten Verteilen eines von einem Gasgenerator zum Aufblasen eines Gassacks erzeugten Gasstroms, wobei der Gasstromverteiler hülsenförmig aus einem flexiblen Material gebildet ist und Befestigungsstrukturen (6, 46a, 46b, 27, 37, 47, 57a, 57b) zur Befestigung an einem Gasgenerator (1) aufweist,
**dadurch gekennzeichnet, dass**
die Befestigungsstrukturen mindestens eine Befestigungslasche (27, 37, 47) umfassen, die an einem Ende des Gasstromverteilers (2, 20, 30, 40, 50, 60, 70) ausgebildet ist und über die der Gasstromverteiler (2, 20, 30, 40, 50, 60, 70) mit einem Klemmmittel an dem Gasgenerator (1) angeklemmt werden kann.

2. Gasstromverteiler nach Anspruch 1, **dadurch gekennzeichnet, dass** die Befestigungsstrukturen (6, 46a, 46b, 27, 37, 47, 57a, 57b) so ausgebildet und vorgesehen sind, dass eine Klemmverbindung mit einem Gasgenerator (1) herstellbar ist, ohne dass ein Klemmmittel den gesamten Umfang des Gasstromverteilers (2, 20, 30, 40, 50, 60, 70) umgreifen muss.

3. Gasstromverteiler nach mindestens einem der vorhergehenden Ansprüche, **dadurch gekennzeichnet, dass** die Befestigungsstrukturen (6, 46a, 46b, 27, 37, 47, 57a, 57b) mindestens eine Öffnung (6, 46a, 46b, 56a, 56b, 76, 86, 96) zum Durchführen eines an einem Gasgenerator (1) angeordneten Gewindebolzens (4) umfassen.

4. Gasstromverteiler nach mindestens einem der vorhergehenden Ansprüche, **dadurch gekennzeichnet, dass** die Befestigungslasche (27, 37, 47) als ein vom Rest des Gasstromverteilers (2, 20, 30, 40, 50, 60, 70) hervorstehender Fortsatz ausgebildet ist.

5. Gasstromverteiler nach mindestens einem der vorhergehenden Ansprüche, **dadurch gekennzeichnet, dass** an jedem der beiden Enden des Gasstromverteilers (2, 20, 30, 40, 50, 60, 70) mindestens eine Befestigungslasche (27, 37, 47, 57a, 57b, 77a, 77b, 78a, 78b) angeordnet ist.

6. Gasstromverteiler nach mindestens einem der vorhergehenden Ansprüche, **gekennzeichnet durch** mindestens zwei an demselben Ende des Gasstromverteilers (2, 20, 30, 40, 50, 60, 70) angeordnete Befestigungslaschen (27, 37, 47, 57a, 57b, 77a, 77b, 78a, 78b).

7. Gasstromverteiler nach Anspruch 6, **dadurch gekennzeichnet, dass** die freien Enden der Befestigungslaschen (27, 37, 47, 57a, 57b, 77a, 77b, 78a. 78b) miteinander verbunden sind.

8. Gasstromverteiler nach mindestens einem der vorhergehenden Ansprüche, **dadurch gekennzeichnet, dass** dessen Enden jeweils mindestens eine Ausströmöffnung aufweisen.

9. Gasstromverteiler nach mindestens einem der vorhergehenden Ansprüche, **dadurch gekennzeichnet, dass** dieser zum Verteilen eines Gasstroms in zwei Richtungen ausgebildet und an einem Gasgenerator (1) anordbar ist.

10. Gasstromverteiler nach mindestens einem der vorhergehenden Ansprüche, **dadurch gekennzeichnet, dass** dieser zumindest abschnittsweise aus einem textilen Gewebe gebildet ist.

11. Gasstromverteiler nach mindestens einem der vorhergehenden Ansprüche, **dadurch gekennzeichnet, dass** dieser zumindest abschnittsweise mehrere Lagen eines textilen Gewebes aufweist.

12. Gasstromverteiler nach mindestens einem der vorhergehenden Ansprüche, **dadurch gekennzeichnet, dass** dieser aus einem Zuschnitt eines textilen Gewebes herstellbar ist.

13. Gasstromverteiler nach mindestens einem der vorhergehenden Ansprüche, **dadurch gekennzeichnet, dass** dieser aus einem schlauchförmigen Material gebildet ist.

14. Gasstromverteiler nach mindestens einem der vorhergehenden Ansprüche, **gekennzeichnet durch** eine zumindest abschnittsweise auf der Innenseite angebrachte Beschichtung.

15. Gasstromverteiler nach einem der vorhergehenden Ansprüche, **dadurch gekennzeichnet, dass** er ausgebildet und vorgesehen ist, einen Gasstrom in mehrere Teilströme aufzuteilen und in unterschiedliche Richtungen abzuleiten.

16. Gasstromverteiler nach einem der vorhergehenden Ansprüche, **dadurch gekennzeichnet, dass** er ausgebildet und vorgesehen ist, einen Gasstrom in zwei nahezu entgegengesetzte Richtungen aufzuteilen.

17. Gassackmodul für ein Fahrzeug-Rückhaltesystem mit einem Gasgenerator (1) und einem Gasstromverteiler (2, 20, 30, 40, 50, 60, 70) gemäß Anspruch 1, der den Gasgenerator (1) zumindest im Bereich von in dem Gasgenerator (1) angeordneten Ausströmöffnungen umgibt.

18. Gassackmodul nach Anspruch 17, **dadurch gekennzeichnet, dass** der Gasstromverteiler (2, 20, 30, 40, 50, 60, 70) mittels dessen Befestigungsstrukturen (6, 46a, 46b, 27, 37, 47, 57a, 57b) an dem Gasgenerator (1) befestigt ist.

19. Gassackmodul nach mindestens einem der Ansprüche 17 oder 18, **dadurch gekennzeichnet, dass** der Gasstromverteiler (2, 20, 30, 40, 50, 60, 70) über dessen Befestigungsstrukturen (6, 46a, 46b, 27, 37, 47, 57a, 57b) mittels eines Klemmmittels an dem Gasgenerator (1) angeklemmt ist, das nicht den gesamten Umfang des Gasstromverteilers (2, 20, 30, 40, 50, 60, 70) umgreift.

20. Gassackmodul nach mindestens einem der Ansprüche 17-19, **dadurch gekennzeichnet, dass** an dem Gasgenerator (1) mindestens ein Gewindebolzen (4) angeordnet ist, der eine in dem Gasstromverteiler (2, 20, 30, 40, 50, 60, 70) angeordnete Öffnung (6, 46a, 46b, 56a, 56b, 76, 86, 96) durchgreift und der Gasstromverteiler (2, 20, 30, 40, 50, 60, 70) mittels einer Mutter am Gewindebolzen (4) an dem Gasgenerator (1) befestigt ist.

21. Gassackmodul nach mindestens einem der Ansprüche 17-19, **dadurch gekennzeichnet, dass** an dem Gasgenerator (1) mindestens ein Gewindebolzen (4) angeordnet ist, der eine in dem Gasstromverteiler (2, 20, 30, 40, 50, 60, 70) angeordnete Öffnung (6, 46a, 46b, 56a, 56b, 76. 86, 96) durchgreift und der Gasstromverteiler (2, 20, 30, 40, 50, 60, 70) bei der Montage des Gassackmoduls an einem Gassack oder einem Fahrzeugsitz an dem Gasgenerator (1) befestigbar ist.

22. Gassackmodul nach mindestens einem der Ansprüche 17-21, **dadurch gekennzeichnet, dass** der Gasstromverteiler (2, 20, 30, 40, 50, 60, 70) mindestens eine Befestigungslasche (27, 37, 47, 57a, 57b, 77a, 77b, 78a, 78b) aufweist, über den der Gasstromverteiler (2, 20, 30, 40, 50, 60, 70) an dem Gasgenerator (1) befestigt ist.

23. Gassackmodul nach mindestens einem der Ansprüche 17-22, **dadurch gekennzeichnet, dass** der Gasstromverteiler (2, 20, 30, 40, 50, 60, 70) so aus einem textilen Gewebe gebildet und an dem Gasgenerator (1) angeordnet ist, dass im Bereich zumindest einiger Ausströmöffnungen des Gasgenerators (1) mehrere Gewebelagen angeordnet sind.

24. Gassackmodul nach mindestens einem der Ansprüche 17-23, **dadurch gekennzeichnet, dass** der Gasstromverteiler (2, 20, 30, 40, 50, 60, 70) mindestens zwei an demselben Ende des Gasstromverteilers (2, 20, 30, 40, 50, 60, 70) angeordnete Befestigungslaschen (27, 37, 47, 57a, 57b, 77a, 77b, 78a, 78b) aufweist, deren freie Enden miteinander verbunden sind.

25. Gassackmodul nach mindestens einem der Ansprüche 17-24, **dadurch gekennzeichnet, dass** der Gasstromverteiler (2, 20, 30, 40, 50, 60, 70) so ausgebildet und an dem Gasgenerator (1) angeordnet ist, dass ein aus Ausströmöffnungen des Gasgenerators (1) ausströmende Gasstrom in zwei nahezu entgegengesetzte Richtungen aufgeteilt wird.

26. Gassackmodul nach mindestens einem der Ansprüche 17-25, **dadurch gekennzeichnet, dass** der Gasstromverteiler (2, 20, 30, 40, 50, 60, 70) zumindest im Bereich der Ausströmöffnungen des Gasgenerators (1) beabstandet zu diesem angeordnet ist.

## Claims

1. A gas flow distributor for an airbag module for the specific distribution of a gas flow generated by a gas generator in order to inflate an airbag, wherein the gas flow distributor is formed in the shape of a sleeve from a flexible material, and has fastening structures (6, 46a, 46b, 27, 37, 47, 57a, 57b) for fastening to a gas generator (1), **characterized in that** the fastening structures comprise at least one fastening tab (27, 37, 47) which is formed at one end of the gas flow distributor (2, 20, 30, 40, 50, 60, 70) and via which the gas flow distributor (2, 20, 30, 40, 50, 60, 70) can be clamped to the gas generator (1) by a clamping means.

2. The gas flow distributor as claimed in at least either of claims 1 and 2, **characterized in that** the fastening structures (6, 46a, 46b, 27, 37, 47, 57a, 57b) are designed and provided in such a manner that a clamping connection to a gas generator (1) can be produced without a clamping means having to engage around the entire circumference of the gas flow distributor (2, 20, 30, 40, 50, 60, 70).

3. The gas flow distributor as claimed in at least one of the preceding claims, **characterized in that** the fastening structures (6, 46a, 46b, 27, 37, 47, 57a, 57b) comprise at least one opening (6, 46a, 46b, 56a, 56b, 76, 86, 96) for the passage of a threaded bolt (4) arranged on a gas generator (1).

4. The gas flow distributor as claimed in at least one of the preceding claims, **characterized in that** the fastening tab (27, 37, 47) is designed as an extension which protrudes from the rest of the gas flow distributor (2, 20, 30, 40, 50, 60, 70).

5. The gas flow distributor as claimed in at least one of the preceding claims, **characterized in that** at least one fastening tab (27, 37, 47, 57a, 57b, 77a, 77b, 78a, 78b) is arranged at each of the two ends of the gas flow distributor (2, 20, 30, 40, 50, 60, 70).

6. The gas flow distributor as claimed in at least one of the preceding claims, **characterized by** at least two fastening tabs (27, 37, 47, 57a, 57b, 77a, 77b, 78a, 78b) arranged at the same end of the gas flow distributor (2, 20, 30, 40, 50, 60, 70).

7. The gas flow distributor as claimed in claim 6, **characterized in that** the free ends of the fastening tabs (27, 37, 47, 57a, 57b, 77a, 77b, 78a, 78b) are connected to each other.

8. The gas flow distributor as claimed in at least one of the preceding claims, **characterized in that** the ends thereof each have at least one outflow opening.

9. The gas flow distributor as claimed in at least one of the preceding claims, **characterized in that** it is designed for distributing a gas flow in two directions and can be arranged on a gas generator (1).

10. The gas flow distributor as claimed in at least one of the preceding claims, **characterized in that** it is formed at least in sections from a textile fabric.

11. The gas flow distributor as claimed in at least one of the preceding claims, **characterized in that** it has at least in sections a plurality of layers of a textile fabric.

12. The gas flow distributor as claimed in at least one of the preceding claims, **characterized in that** it can be produced from a blank of textile fabric.

13. The gas flow distributor as claimed in at least one of the preceding claims, **characterized in that** it is formed from a tubular material.

14. The gas flow distributor as claimed in at least one of the preceding claims, **characterized by** a coating applied at least in sections to the inside.

15. The gas flow distributor as claimed in one of the preceding claims, **characterized in that** it is designed and provided for dividing a gas flow into a plurality of part flows and for conducting them away in different directions.

16. The gas flow distributor as claimed in one of the preceding claims, **characterized in that** it is designed and provided for dividing a gas flow into two virtually opposite directions.

17. An airbag module for a vehicle restraint system with a gas generator (1) and a gas flow distributor (2, 20, 30, 40, 50, 60, 70) as claimed in claim 1, said gas flow distributor surrounding the gas generator (1) at least in the region of outflow openings arranged in the gas generator (1).

18. The airbag module as claimed in claim 17, **characterized in that** the gas flow distributor (2, 20, 30, 40, 50, 60, 70) is fastened by means of the fastening structures (6, 46a, 46b, 27, 37, 47, 57a, 57b) thereof to the gas generator (1).

19. The airbag module as claimed in at least either of claims 17 and 18, **characterized in that** the gas flow distributor (2, 20, 30, 40, 50, 60, 70) is clamped via the fastening structures (6, 46a, 46b, 27, 37, 47, 57a, 57b) thereof to the gas generator (1) by means of a clamping means which does not engage around the entire circumference of the gas flow distributor (2, 20, 30, 40, 50, 60, 70).

20. The airbag module as claimed in at least one of claims 17-19, **characterized in that** at least one threaded bolt (4) is arranged on the gas generator (1) and reaches through an opening (6, 46a, 46b, 56a, 56b, 76, 86, 96) arranged in the gas flow distributor (2, 20, 30, 40, 50, 60, 70), and the gas flow distributor (2, 20, 30, 40, 50, 60, 70) is fastened to the gas generator (1) by means of a nut on the threaded bolt (4).

21. The airbag module as claimed in at least one of claims 17-19, **characterized in that** at least one threaded bolt (4) is arranged on the gas generator (1) and reaches through an opening (6, 46a, 46b, 56a, 56b, 76, 86, 96) arranged in the gas flow distributor (2, 20, 30, 40, 50, 60, 70), and the gas flow distributor (2, 20, 30, 40, 50, 60, 70) can be fastened to the gas generator (1) during the installation of the airbag module to an airbag or a vehicle seat.

22. The airbag module as claimed in at least one of claims 17-21, **characterized in that** the gas flow distributor (2, 20, 30, 40, 50, 60, 70) has at least one fastening tab (27, 37, 47, 57a, 57b, 77a, 77b, 78a, 78b) via which the gas flow distributor (2, 20, 30, 40, 50, 60, 70) is fastened to the gas generator (1).

23. The airbag module as claimed in at least one of claims 17-22, **characterized in that** the gas flow distributor (2, 20, 30, 40, 50, 60, 70) is formed from a textile fabric and arranged at the gas generator (1) in such a manner that a plurality of fabric layers are arranged in the region of at least some outflow openings of the gas generator (1).

24. The airbag module as claimed in at least one of claims 17-23, **characterized in that** the gas flow distributor (2, 20, 30, 40, 50, 60, 70) has at least two fastening tabs (27, 37, 47, 57a, 57b, 77a, 77b, 78a, 78b) which are arranged at the same end of the gas flow distributor (2, 20, 30, 40, 50, 60, 70) and the free ends of which are connected to each other.

25. The airbag module as claimed in at least one of claims 17-24, **characterized in that** the gas flow distributor (2, 20, 30, 40, 50, 60, 70) is designed and arranged on the gas generator (1) in such a manner that a gas flow flowing out of outflow openings of the gas generator (1) is divided into two virtually opposite directions.

26. The airbag module as claimed in at least one of claims 17-25, **characterized in that** the gas flow distributor (2, 20, 30, 40, 50, 60, 70) is arranged at a distance from the gas generator (1) at least in the region of the outflow openings thereof.

## Revendications

1. Répartiteur de flux gazeux pour un module d'airbag destiné à une répartition ciblée d'un flux gazeux engendré par un générateur de gaz pour le gonflage d'un coussin d'air, dans lequel le répartiteur de flux gazeux est réalisé en forme de douille à partir d'un matériau flexible et comprend des structures de fixation (6, 46a, 46b, 27, 37, 47, 57a, 57b) pour la fixation sur un générateur de gaz (1),
**caractérisé en ce que**
les structures de fixation comprennent au moins une patte de fixation (27, 37, 47) qui est réalisée à une extrémité du répartiteur de flux gazeux (2, 20, 30, 40, 50, 60, 70) et au moyen de laquelle le répartiteur de flux gazeux (2, 20, 30, 40, 50, 60, 70) peut être pincé sur le générateur de gaz (1) à l'aide d'un moyen à pince.

2. Répartiteur de flux gazeux selon la revendication 1, **caractérisé en ce que** les structures de fixation (6, 46a, 46b, 27, 37, 47, 57a, 57b) sont réalisées et prévues de telle manière qu'il est possible d'établir une liaison par pincement avec un générateur de gaz (1) sans qu'un moyen à pince doive entourer la totalité de la périphérie du répartiteur de flux gazeux (2, 20, 30, 40, 50, 60, 70).

3. Répartiteur de flux gazeux selon l'une au moins des revendications précédentes, **caractérisé en ce que** les structures de fixation (6, 46a, 46b, 27, 37, 47, 57a, 57b) comprennent au moins une ouverture (6, 46a, 46b, 56a, 56b, 76, 86, 96) pour la traversée d'un goujon fileté (4) agencé sur le générateur de gaz (1).

4. Répartiteur de flux gazeux selon l'une au moins des revendications précédentes, **caractérisé en ce que** la patte de fixation (27, 37, 47) est réalisée sous la forme d'un prolongement qui dépasse depuis le reste du répartiteur de flux gazeux (2, 20, 30, 40, 50, 60, 70).

5. Répartiteur de flux gazeux selon l'une au moins des revendications précédentes, **caractérisé en ce qu'**au moins une patte de fixation (27, 37, 47, 57a, 57b, 77a, 77b, 78a, 78b) est agencée sur chacune des deux extrémités du répartiteur de flux gazeux (2, 20, 30, 40, 50, 60, 70).

6. Répartiteur de flux gazeux selon l'une au moins des revendications précédentes, **caractérisé par** au moins deux pattes de fixation (27, 37, 47, 57a, 57b, 77a, 77b, 78a, 78b) agencées à la même extrémité du répartiteur de flux gazeux (2, 20, 30, 40, 50, 60, 70).

7. Répartiteur de flux gazeux selon la revendication 6, **caractérisé en ce que** les extrémités libres des pattes de fixation (27, 37, 47, 57a, 57b, 77a, 77b, 78a, 78b) sont reliées les unes aux autres.

8. Répartiteur de flux gazeux selon l'une au moins des revendications précédentes, **caractérisé en ce que** ses extrémités présentent chacune au moins une ouverture de sortie pour le flux.

9. Répartiteur de flux gazeux selon l'une au moins des revendications précédentes, **caractérisé en ce que** celui-ci est réalisé pour répartir le flux gazeux dans deux directions et est susceptible d'être agencé sur un générateur de gaz (1).

10. Répartiteur de flux gazeux selon l'une au moins des revendications précédentes, **caractérisé en ce que** celui-ci est réalisé au moins par tronçons à partir d'un textile.

11. Répartiteur de flux gazeux selon l'une au moins des revendications précédentes, **caractérisé en ce que** celui-ci comprend au moins par tronçons plusieurs couches d'un textile.

12. Répartiteur de flux gazeux selon l'une au moins des revendications précédentes, **caractérisé en ce que** celui-ci est réalisable à partir d'un flan de textile.

13. Répartiteur de flux gazeux selon l'une au moins des revendications précédentes, **caractérisé en ce que** celui-ci est formé en un matériau semblable à un tuyau.

14. Répartiteur de flux gazeux selon l'une au moins des revendications précédentes, **caractérisé par** un revêtement appliqué au moins par tronçons sur la face intérieure.

15. Répartiteur de flux gazeux selon l'une des revendications précédentes, **caractérisé en ce qu'**il est réalisé et prévu pour répartir un flux gazeux en plusieurs flux partiels et les dériver dans des directions différentes.

16. Répartiteur de flux gazeux selon l'une des revendications précédentes, **caractérisé en ce qu'**il est réalisé et prévu pour répartir un flux gazeux dans deux directions approximativement opposées.

17. Module d'airbag pour un système de retenue dans un véhicule, comprenant un générateur de gaz (1) et un répartiteur de flux gazeux (2, 20, 30, 40, 50, 60, 70) selon la revendication 1, qui entoure le générateur de gaz (1) au moins dans la région d'ouvertures de sortie de flux ménagées dans le générateur de gaz (1).

18. Module d'airbag selon la revendication 17, **caractérisé en ce que** le répartiteur de flux gazeux (2, 20, 30, 40, 50, 60, 70) est fixé sur le générateur de gaz (1) au moyen de ses structures de fixation (6, 46a, 46b, 27, 37, 47, 57a, 57b).

19. Module d'airbag selon l'une au moins des revendications 17 ou 18, **caractérisé en ce que** le répartiteur de flux gazeux (2, 20, 30, 40, 50, 60, 70) est pincé sur le générateur de gaz (1) à l'aide d'un moyen à pince via ses structures de fixation (6, 46a, 46b, 27, 37, 47, 57a, 57b), ledit moyen à pince n'entourant pas la totalité de la périphérie du répartiteur de flux gazeux (2, 20, 30, 40, 50, 60, 70).

20. Module d'airbag selon l'une au moins des revendications 17 à 19, **caractérisé en ce qu'**au moins un goujon fileté (4) est agencé sur le générateur de gaz (1), ledit goujon traversant une ouverture (6, 46a, 46b, 56a, 56b, 76, 86, 96) ménagée dans le répartiteur de flux gazeux (2, 20, 30, 40, 50, 60, 70), et le répartiteur de flux gazeux (2, 20, 30, 40, 50, 60, 70) est fixé sur le générateur de gaz (1) au moyen d'un écrou sur le goujon fileté (4).

21. Module d'airbag selon l'une au moins des revendications 17 à 19, **caractérisé en ce qu'**au moins un goujon fileté (4) est agencé sur le générateur de gaz (1), ledit goujon traversant une ouverture (6, 46a, 46b, 56a, 56b, 76, 86, 96) ménagée dans le répartiteur de flux gazeux (2, 20, 30, 40, 50, 60, 70), et lors du montage du module d'airbag sur un coussin à gaz ou sur un siège de véhicule, le répartiteur de flux gazeux (2, 20, 30, 40, 50, 60, 70) est susceptible d'être fixé sur le générateur de gaz (1).

22. Module d'airbag selon l'une au moins des revendications 17 à 21, **caractérisé en ce que** le répartiteur de flux gazeux (2, 20, 30, 40, 50, 60, 70) comprend au moins une patte de fixation (27, 37, 47, 57a, 57b, 77a, 77b, 78a, 78b) au moyen de laquelle le répartiteur de flux gazeux (2, 20, 30, 40, 50, 60, 70) est fixé sur le générateur de gaz (1)

23. Module d'airbag selon l'une au moins des revendications 17 à 22, **caractérisé en ce que** le répartiteur de flux gazeux (2, 20, 30, 40, 50, 60, 70) est formé à partir d'un textile et est agencé sur le générateur de gaz (1) de telle façon que plusieurs couches de textile sont agencées dans la région de quelques-unes au moins des ouvertures de sortie de flux du générateur de gaz (1).

24. Module d'airbag selon l'une au moins des revendications 17 à 23, **caractérisé en ce que** le répartiteur de flux gazeux (2, 20, 30, 40, 50, 60, 70) comprend au moins deux pattes de fixation (27, 37, 47, 57a, 57b, 77a, 77b, 78a, 78b) agencées à la même extrémité du répartiteur de flux gazeux (2, 20, 30, 40, 50, 60, 70) et dont les extrémités libres sont reliées les unes aux autres.

25. Module d'airbag selon l'une au moins des revendications 17 à 24, **caractérisé en ce que** le répartiteur de flux gazeux (2, 20, 30, 40, 50, 60, 70) est réalisé de telle manière et est agencé sur le générateur de gaz (1) de telle façon qu'un flux de gaz sortant des ouvertures de sortie de flux du générateur de gaz (1) est réparti dans deux directions approximativement opposées.

26. Module d'airbag selon l'une au moins des revendications 17 à 25, **caractérisé en ce que** le répartiteur de flux gazeux (2, 20, 30, 40, 50, 60, 70) est agencé à distance du générateur de gaz (1) au moins dans la région des ouvertures de sortie de flux de celui-ci.
